# EUROPÄISCHE PATENTANMELDUNG

(11) **EP 0 794 602 A2**
(43) Veröffentlichungstag der Anmeldung: **10.09.1997**
(21) Anmeldenummer: 97103667.8
(22) Anmeldetag: 05.03.1997
(51) Int. Cl.: H02B 1/32, H02B 1/42

(54) **Schaltschrankbefestigungsteil zur mittelbaren oder unmittelbaren Befestigung wenigstens eines Schaltschrank-Gerätes**

(30) Priorität: 07.03.1996 DE 19608903
(71) Anmelder: STEGO ELEKTROTECHNIK GMBH, D-74523 Schwäbisch Hall (DE)
(72) Erfinder: Eisenhauer, Hartmut, 74545 Michelfeld (DE)
(74) Vertreter: Bohnenberger, Johannes, Dr.

(57) **Zusammenfassung**

Bei einem Schaltschrankbefestigungsteil zur mittelbaren oder unmittelbaren Befestigung wenigstens eines Schaltschrank-Gerätes, insbesondere elektrischen Gerätes in einem Schaltschrank, mit einem Befestigungskörper, der rückseitig wenigstens ein erstes Befestigungselement zu seiner Befestigung am Schaltschrank und vorderseitig wenigstens ein Befestigungselement zur mittelbaren oder unmittelbaren, vorzugsweise lösbaren Befestigung wenigstens eines Gerätes aufweist ist das rückseitige Befestigungselement durch einen beidseitig wirksamen Klebestreifen gebildet.

## Beschreibung

In einem Schaltschrank sind hauptsächlich elektrische Schaltschrank-Geräte verschiedener Arten angeordnet, die vorzugsweise lösbar zu befestigen sind, da bei einem Defekt eines Gerätes dessen Austausch möglich sein soll.

Ein bekanntes Schaltschrankbefestigungsteil ist durch eine im Querschnitt U-förmige Montageleiste mit abstehenden Randschenkeln gebildet, z. B. DIN 35mm Cliptechik, wobei im Steg der Montageleiste mittig und in einer Reihe angeordnet, vorzugsweise durch Langlöcher gebildete Befestigungslöcher vorgesehen sind, mit denen die Montageleiste mittels z. B. zwei die Löcher und z. B. die Rückwand eines Schaltschranks durchfassende Befestigungsschrauben in einer Position befestigt ist, in der die Randschenkel einen Abstand von der Rückkwand aufweisen. Übliche Geräte weisen an ihrer Befestigungsseite Hintergreifnasen auf, mit denen sie hinter den Randschenkeln lösbar verrastbar sind.

Die bekannte Ausgestaltung hat sich zwar als brauchbar erwiesen, jedoch kann sie nur da realisiert werden, wo im Schaltschrank Befestigungslöcher für die Befestigungsschrauben vorhanden sind.

In der Praxis besteht bei der Bestückung eines Schaltschranks mit Geräten oft die Forderung, ein Gerät an einer Stelle anzuordnen, die für die Befestigung des Geräts nicht vorgesehen oder vorbereitet und somit nicht geeignet ist.

Außerdem besteht in vielen Fällen die Forderung, z. B. bei einer Nachrüstung, nur ein oder wenige Geräte zu befestigen, wozu die Montageleiste in kleine Längsabschnitte geteilt werden müßte. Auch diese Maßnahme ist mit einem erheblichen Arbeits- und Zeitaufwand verbunden.

Der Erfindung liegt die Aufgabe zugrunde, ein Schaltschrankbefestigungsteil so auszugestalten, daß es eine Gerätebefestigung größerer Variabilität gestattet.

Diese Aufgabe wird durch die Merkmale der Ansprüche 1 oder 2 gelöst.

Bei der erfindungsgemäßen Ausgestaltung nach Anspruch 1 ist das Schaltschrankbefestigungsteil durch einen doppelseitigen Klebestreifen an der jeweiligen Innenwand (Rückseite, Seite oder Tür) zu befestigen, wodurch die Befestigungsstelle völlig unabhängig von korrespondierenden Befestigungselementen am Schaltschrank ist. Eine solche Befestigung läßt sich mit geringem Aufwand einfach und schnell und somit kostengünstig durchführen. Bei Versuchen hat es sich gezeigt, daß in der modernen Klebetechnik entwickelte Industrieklebebänder eine sichere Klebeverbindung zumindest dann gewährleisten, wenn nur ein Gerät oder eine geringe Anzahl Geräte zu befestigen, insbesondere nachzurüsten ist, wobei das zu befestigende Gewicht verhältnismäßig gering ist. Die erfindungsgemäße Ausgestaltung eignet sich insbesondere für die Befestigung von Kleingeräten, wobei das Schaltschrankbefestigungsteil vorzugsweise nur so groß bemessen ist, daß ein Gerät daran befestigbar ist.

Bei der Ausgestaltung nach Anspruch 2 sind dem Schaltschrankbefestigungsteil vorderseitig zwei Arten von Befestigungselementen zugeordnet, die es ermöglichen, ein Gerät wahlweise unmittelbar am Schaltschrankbefestigungsteil oder mittelbar über ein z. B. die Funktion eines Adapters erfüllendes Tragteil zu befestigen. Bei einem solchen Tragteil kann es sich z. B. um eine Schiene oder Montageleiste für mehrere Geräte handeln. Die erfindungsgemäße Ausgestaltung führt zu mehreren Vorteilen. Zum einen ist es möglich, auch solche Geräte zu befestigen, deren Befestigungselemente am Schaltschrankbefestigungsteil nicht passen. Solche Geräte können mittelbar mit dem Tragteil am Schaltschrankbefestigungsteil befestigt werden. Das Schaltschrankbefestigungsteil und/oder das Tragteil erfüllen die Funktion eines Adapters.

In den Unteransprüchen sind Merkmale enthalten, die zu kleinen, einfachen und kostengünstig herstellbaren Bauweisen führen, eine sichere Befestigung gewährleisten, eine handhabungsfreundliche Befestigung des Schaltschrankbefestigungsteils, des Tragteils und/oder des oder der Geräte unmittelbar oder mittelbar am Schaltschrankbefestigungsteil ermöglichen und außerdem die Leitungsführung übriger elektrischer Leitungen im Schaltschrank verbessern, da bei der Verwendung eines Tragteils eine Brücke entsteht, unter der Kabel verlegt und gehalten werden können.

Die erfindungsgemäßen Ausgestaltungen ermöglichen es somit, ein oder mehrere Geräte in solchen Bereichen des Schaltschranks zu befestigen, die für eine Befestigung nicht vorgesehen oder vorbereitet sind, z. B. weil der Schaltschrank bereits vollständig mit Geräten bestückt ist, oder die Befestigung in bestimmten Bereichen des Schaltschranks anzuordnen, die aus leitungstechnischen Gründen oder aus wärmetechnischen Gründen besonders geeignet sind. Letzteres kann bei Geräten der Fall sein, die temperaturempfindliche Elemente enthalten, wie es z. B. bei einem Temperaturmesser oder einem Temperaturschalter der Fall ist.

Nachfolgend werden die Erfindung und weitere durch sie erzielbare Vorteile anhand von bevorzugten Ausführungsbeispielen und Zeichnungen näher erläutert. Es zeigt:
- Fig. 1: ein erfindungsgemäßes Schaltschrankbefestigungsteil in der Vorderansicht;
- Fig. 2: das Schaltschrankbefestigungsteil in der Seitenansicht von links;
- Fig. 3: das Schaltschrankbefestigungsteil in der Draufsicht;
- Fig. 4: den Schnitt IV-IV in Fig. 1;
- Fig. 5: den Schnitt V-V in Fig. 1;
- Fig. 6: ein erstes Einbaubeispiel für das Schaltschrankbefestigungsteil in der Seitenansicht von links;
- Fig. 7: ein zweites Einbaubeispiel in Seitenansicht von links; und
- Fig. 8: das Schaltschrankbefestigungsteil beim zweiten Einbaubeispiel mit einer an seiner Vorderseite befestigten Montageschiene in der Vorderansicht.

Das allgemein mit 1 bezeichnete Schaltschrankbefestigungsteil weist einen Befestigungskörper 2 quaderförmiger Grundform auf, dessen Dicke a kleiner bemessen ist, als seine Länge b und seine Breite c, die eine viereckige, z. B. quadratische oder rechteckige Querschnittsform vorgeben.

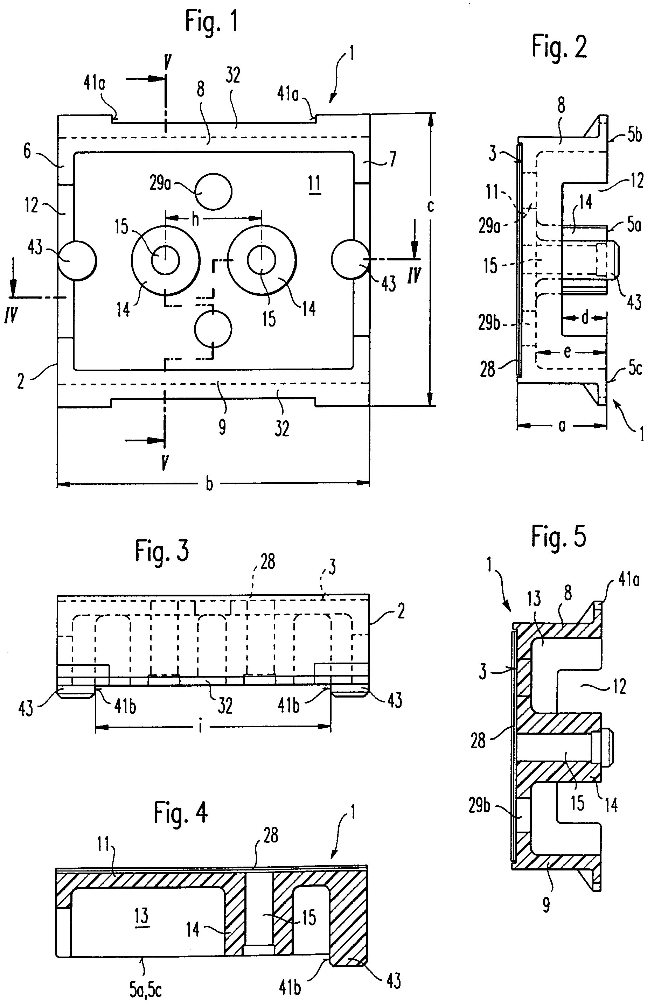

An der Rückseite weist der Befestigungskörper 2 eine groß- oder vollflächige ebene Rückenfläche 3 auf, die parallel zu einer Anlageteilfläche 5a, 5b, 5c an der Vorderseite angeordnet ist, die in einer Ebene liegen. Aus Gründen der Material- und Gewichtsersparnis weist der Befestigungskörper 2 eine topfförmige Grundform auf. Der Hohlraum dieser Topfform ist vorderseitig offen, wodurch sich jeweils einander gegenüberliegend zwei seitliche Seitenwände 6, 7, eine obere Seitenwand 8 und eine untere Seitenwand 9 ergeben, die von einer Basiswand 11 ausgehen und in den vier Ecken des Befestigungskörpers 2 ineinander übergehen. In den seitlichen Seitenwänden 6, 7 sind Aussparungen 12 z. B. rechteckiger Form vorgesehen, deren Tiefe d geringer bemessen ist als die Tiefe e des Hohlraums 13. In der in Fig. 1 dargestellten normalen Einbauposition des Schaltschrankbefestigungsteils 1 ist die sich horizontal erstreckende Länge d der Grundform größer bemessen als die vertikale Breite c.

Von der Basiswand 11 ragen im mittleren Bereich ein oder zwei, einen Abstand voneinander aufweisende Befestigungsansätze 14 vor, deren freie Endflächen in der Seitenebene der Vorderseite liegen und somit die Anlageteilflächen 5a bilden. Aufgrund des Vorhandenseins der Aussparungen 12 und des Hohlraums 10 sind eine obere und eine untere Anlageteilfläche 5b im oberen und unteren Umfangsrandbereich vorhanden. In dem oder den Befestigungsansätzen 14 ist jeweils ein Sack- oder Durchgangsloch 15 angeordnet, das nach vorne offen ist.

Das Schaltschrankbefestigungsteil 1 dient zur unmittelbaren oder mittelbaren Befestigung von Schaltschrankgeräten, insbesondere elektrischen Geräten wie z. B. Relais, Schutzzeitgliedern, Thermostaten, Reihenklemmen und dergleichen im Schaltschrank, wobei die Befestigung an einer der Wände des Schaltschranks erfolgen kann, z. B. an dessen Tür und/oder Rück- und Seitenwänden.

Bei den noch zu beschreibenden Einbaubeispielen ist das Schaltschrankbefestigungsteil 1 an der Innenseite der Rückwand 16 eines aus Vereinfachungsgründen im weiteren nicht dargestellten Schaltschranks befestigt. Hierzu dienen eine oder zwei erste unlösbare oder lösbare Befestigungsvorrichtung 17a, 17b, die zwischen der Rückwand 16 und dem Befestigungskörper 2 wirksam sind und in zwei Ausführungsvarianten oder -beispielen vorgesehen sein können.

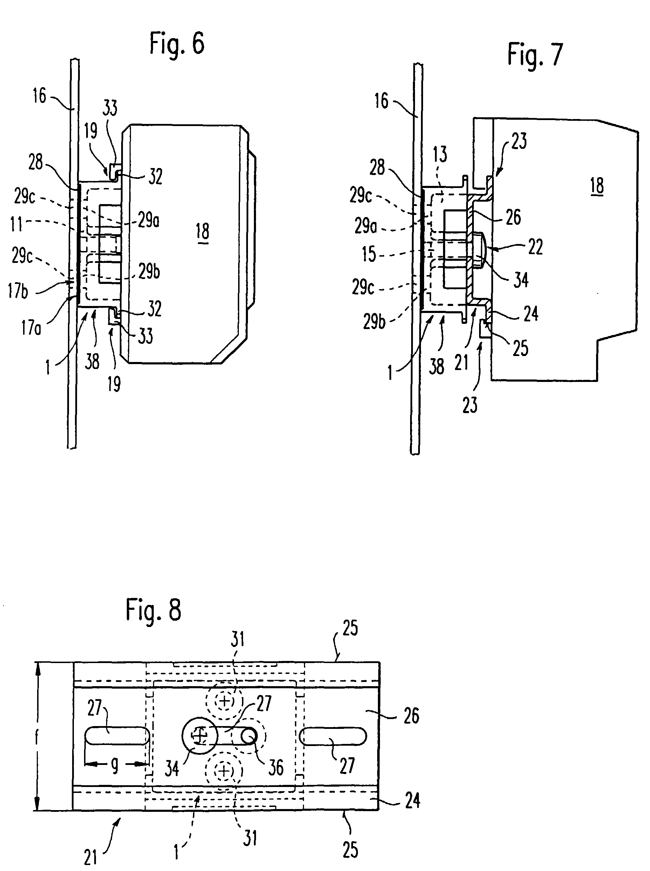

Beim Einbaubeispiel gemäß Fig. 6 ist ein elektrisches Gerät 18, z. B. ein Thermostat, durch eine zweite Befestigungsvorrichtung 19 unmittelbar am Schaltschrankbefestigungsteil 1 an dessen Vorderseite befestigt.

Beim Einbaubeispiel gemäß Fig. 7 ist ein elektrisches Gerät 18, z. B. ebenfalls ein Thermostat, durch eine Montageleiste 21 mittelbar an der Vorderseite des Schaltschrankbefestigungsteils 1 befestigt. Zur Befestigung der Montageleiste 21 am Befestigungskörper 2 dient eine dritte Befestigungsvorrichtung 22, die lösbar oder unlösbar sein kann. Zur Befestigung des Gerätes 18 an der Montageleiste 21 ist eine vierte Befestigungsvorrichtung 23 vorgesehen.

Bei der zweiten und der vierten Befestigungsvorrichtung 19, 23 handelt es sich vorzugsweise um Schnellschlußverbindungen, insbesondere Verrastungsvorrichtungen, die bei einem Defekt des Gerätes 18 einen schnellen und handhabungsfreundlichen Austausch des Gerätes 18 ermöglichen.

Die Montageleiste 21 ist durch eine Profilschiene gebildet, die eine U-förmige Querschnittsform mit seitlich abstehenden Randschenkeln 24 aufweist, deren Kanten 25 einen Querabstand f voneinander haben. Die aus Kunststoff oder aus Metall, z. B. aus Stahl, bestehende Montageleiste 21 kann eine Noom-Leiste sein und sie weist zu ihrer Befestigung in ihrem Steg 26 mittig in einer Reihe angeordnete Befestigungslöcher 27 in Form von Langlöchern auf, deren Länge mit g bezeichnet ist. Normalerweise wird eine solche Montageleiste 21 mittels die Löcher 27 durchfassenden Schrauben unmittelbar an einer Wand des Schaltschranks 16 festgeschraubt. Auf der Montageleiste 21, deren Länge der jeweiligen Anzahl Geräte 18 oder der Schaltkasteninnengröße angepaßt sein kann, stehen ein Anordnungsplatz oder eine Mehrzahl Anordnungsplätze für Schaltkastengeräte, insbesondere elektrische Geräte 18, zur Verfügung.

Im folgenden werden die vorbeschriebenen Befestigungsvorrichtungen 17a, 17b, 19, 22 und 23 beschrieben.

Die ersten Befestigungsvorrichtungen 17a, 17b sind in zwei Ausführungsbeispielen verwirklicht. Beim ersten Ausführungsbeispiel ist das dem Befestigungsteil 11 zugeordnete Befestigungselement durch eine doppelseitige Klebefolie 28 gebildet, die zwischen der Rückfläche 3 und der Rückwand 16 klebend angeordnet ist. Bei der Klebefolie 28 kann es sich um eine solche handeln, die als separates Befestigungsmittel beidseitig mit einem Schutzfilm abgedeckt ist und z. B. von einer Rolle abgezogen und in passenden Längen abgelängt werden kann. Nach Abzug der Schutzfilme läßt sich die Klebefolie 28 zwischen dem Schaltschrankbefestigungsteil 1 und der Rückwand 16 verkleben. Es ist auch möglich, die Klebefolie 28 nach Abzug einer Schutzfolie auf der Anlage- oder Rückfläche 3 anzukleben und somit am Schaltschrankbefestigungsteil 1 als Anbauteil vorzufertigen, so daß es zum Ankleben an z. B. der Rückwand 16 lediglich eines Abziehens der anderen Schutzfolie bedarf und dann die Klebefolie 28 angeklebt werden kann. Die Klebefolie ist vorzugsweise einteilig und großflächig, insbesondere ist sie an die Abmessungen der Rückfläche 3 angepaßt.

Beim zweiten Ausführungsbeispiel ist die erste Befestigungsvorrichtung 17b durch andere Befestigungselemente gebildet. Es können am Schaltschrankbefestigungsteil 1 ein oder zwei Löcher 29a, 29b in der Basiswand 11 gebildet sein, mit denen der Befestigungskörper 2 mittels die Löcher 29a, 29b und Löcher 29c in der Rückwand 16 durchfassende Kopfschrauben 31 befestigbar ist, die z. B. in Fig. 8 als verdeckte Teile dargestellt sind. Da die Löcher 29a, 29b sich im Hohlraum 13 befinden sind die Köpfe der Kopfschrauben 31 in vorteilhafter Weise versenkt angeordnet. Die Löcher 29a, 29b sind auch im Klebestreifen 28 an passender Stelle angeordnet oder sie werden darin mit den Schrauben 31 durchstoßen.

Die Befestigungsvorrichtungen 17a, 17b (Kleben, Schrauben) können jeweil einzeln oder in Kombination angeordnet sein.

Die dem Befestigungskörper 2 zugehörigen Befestigungselemente der zweiten Befestigungsvorrichtung 19 sind durch zwei einander gegenüberliegend am Befestigungskörper 2 angeordnete Hintergreifstege 32 gebildet, die von der oberen und der unteren Seitenwand 8, 9 etwa parallel zu der Anlageteilfläche 5b abstehen und bei der vorliegenden Ausgestaltung in der Ebene der Anlageteilflächen 5 liegen. Die zugehörigen, am Gerät 18 angeordneten Befestigungselemente sind durch einander gegenüberliegende Hintergreifnasen 33 gebildet, wobei auf der einen Seite, hier der oberen Seite, ein Hintergreifnasenpaar oder eine Hintergreifnasenschiene angeordnet sein kann und auf der gegenüberliegenden Seite eine aus einer Verrastungsstellung in eine Freigabestellung elastisch ausbiegbare oder bewegbare Verrastungsnase gebildet sein kann, so daß die Hintergreifnasen 33 hinter den Hintergreifstegen 32 lösbar verrastbar sind.

Bei dem Einbaubeispiel gemäß Fig. 6 dient das Schaltschrankbefestigungsteil 1 dazu, ein Gerät 18 unmittelbar zu befestigen. Falls mehrere Geräte 18 zu befestigen sind, sind mehrere Schaltschrankbefestigungsteile 1 im vorbeschriebenen Sinne nebeneinander zu verwenden.

Beim Einbaubeispiel gemäß Fig. 7 sind die Befestigungselemente der dritten Befestigungsvorrichtung 22 zwischen der Montageleiste 21 und dem Schaltschrankbefestigungsteil 1 durch das oder die Löcher 15 und eine oder zwei Kopfschrauben 34 gebildet, die in wenigstens ein vorgefertigtes Loch 15 im zugehörigen Befestigungsansatz 14 eingeschraubt sind. Die Kopfschrauben 34 sind vorzugsweise selbstschneidende Schrauben und das oder die Löcher 15 sind in ihrer Querschnittsgröße entsprechend kleiner bemessen. Der Abstand h der Löcher 15 ist an die Länge g der Löcher 27 so angepaßt, daß eine oder beide Kopfschrauben 34 in das zugehörige Langloch 27 passen.

Es ist im Rahmen der Erfindung möglich, nur eine Kopfschraube 34 zu verwenden. Um in diesem Falle eine Drehsicherung zu haben, ist es von Vorteil, in dem anderen Loch 15 einen Stift 36 anzuordnen, der vom zugehörigen Befestigungsansatz 14 vorragt und somit in das Langloch 27 hineinragt. Für ein Einbaubeispiel gemäß Fig. 6 ist es vorteilhaft, den Stift 36 verschiebbar und gegen eine im zugehörigen Loch 15 angeordnete Feder einfederbar anzuordnen, so daß für diesen Befestigungsfall das zugehörige Gerät 18 den Stift 36 einzuschieben vermag. Ein solcher Stift 36 ist durch einen Anschlag gegen ein völliges Herausschieben aus seinem Loch 15 zu sichern, damit er nicht verlorengeht, was z. B. durch einen inneren Kopf am Stift 36 gebildet sein kann, der durch eine innere Schulterfläche des z. B. als Stufenloch ausgebildeten Lochs 15 begrenzt sein kann.

Bei der dem Einbaubeispiel gemäß Fig. 7 zugeordneten vierten Befestigungsvorrichtung 23 sind die Befestigungselemente am Gerät 18 bei der vorliegenden Ausgestaltung durch die Hintergreifnasen 33 gebildet, wie sie bereits bei der zweiten Befestigungsvorrichtung 19 beschrieben worden sind. Diese Hintergreifnasen 33 sind an die Abmessungen der Randschenkel 24 mit den Eingreifkanten 25 so angepaßt, daß sie hinter diesen Befestigungselementen lösbar verrastbar sind. Dabei ist es von Vorteil, die Größe der Hintergreifnasen 33 und die Randschenkel 24 an die Größe der Hintergreifstege 32 anzupassen oder gleich auszubilden, so daß die Hintergreifnasen 33 wahlweise an der Montageleiste 21 oder am Schaltschrankbefestigungsteil 1 verrastbar sind.

Das Einbaubeispiel gemäß Fig. 7 eignet sich zur Befestigung eines oder mehrerer solcher Geräte 18, deren Befestigungselemente zu den zugehörigen Befestigungselementen am Schaltschrankbefestigungsteil 1 passen und/oder zu den zugehörigen Befestigungselementen an der Montageleiste 21 passen. Beim Vorhandensein der Montageleiste 21 können nämlich mehrere Geräte 18 nebeneinanderliegend mittelbar an einem Schaltschrankbefestigungsteil 1 befestigt werden. Die Montageleiste 21 ist entsprechend lang zu bemessen. Falls die Anzahl der in diesem Sinne zu befestigenden Geräte 18 verhältnismäßig groß ist, empfiehlt es sich, zwei oder mehr Schaltschrankbefestigungsteile 1 vorzugsweise in den Endbereichen der Montageschiene anzuordnen und zu befestigen, wodurch die Befestigungsstabilität auch bei langen Montageleisten 21 vergrößert werden kann.

Die Befestigung des oder der Schaltschrankbefestigungsteile 1 durch Kleben ermöglicht eine Befestigung an wahlweisen Stellen des Schaltschranks 16, wo z. B. vorgefertigte Schraubenlöcher nicht vorhanden sind.

Die vorbeschriebenen Ausführungsbeispiele machen deutlich, daß das Schaltschrankbefestigungsteil 1 die Funktion eines Adapters 38 erfüllt und zwar sowohl als direktes Befestigungsteil zwischen einer Befestigungswand und einem Gerät 18 oder als indirektes Befestigungsteil 1 zwischen einer Befestigungswand und einer Montageleiste 21.

Bei dem Einbaubeispiel gemäß Fig. 6 ist es vorteilhaft, dem Schaltschrankbefestigungsteil 1 im Bereich beider horizontaler Enden jeweils ein Arretierelement zuzuordnen, daß das befestigte Gerät 18 gegen ein seitliches Verschieben begrenzt. Hierfür gibt es zwei Ausführungsbeispiele. Ein erstes Arretierelement kann durch eine Verjüngung der Hintergreifstege 32 in dem Bereich gebildet sein, in dem die zugehörigen Hintergreifnasen 33 oder das Gerät 18 angeordnet ist, wodurch sich zwei seitliche Arretierschultern 41a ergeben, die das Gerät 18 seitlich begrenzen. Eine solche Verjüngung kann an einem oder an beiden Hintergreifstegen 32 vorgesehen sein.

Bei einem zweiten Ausführungsbeispiel sind die Arretierelemente durch die Arretierschultern 41b von zwei seitlichen Arretiervorsprüngen 43 gebildet, die in Form von Zapfen zu beiden Seiten des Geräts 18 von der Basiswand 11 oder von den seitlichen Seitenwänden 6, 7 vorragen und die Ebene der Anlageteilflächen 5a, 5b etwas überragen. Bei einer solchen Ausgestaltung ist der Abstand i der Arretiervorsprünge 41b an die Breite des zugehörigen Gerätes 18 oder an die Breite von Anbauteilen desselben anzupassen.

Das Schaltschrankbefestigungsteil 1 bzw. der Körper 2 ist ein einteiliges Bauteil, insbesondere ein Spritzgießteil, vorzugsweise aus Kunststoff.

## Patentansprüche

1. Schaltschrankbefestigungsteil zur mittelbaren oder unmittelbaren Befestigung wenigstens eines Schaltschrank-Gerätes, insbesondere elektrischen Gerätes (18) in einem Schaltschrank, mit einem Befestigungskörper (2), der wenigstens ein rückseitiges Befestigungselement (17a) zu seiner Befestigung am Schaltschrank und wenigstens ein vorderseitiges Befestigungselement zur mittelbaren oder unmittelbaren, lösbaren Befestigung wenigstens eines Gerätes (18) aufweist, wobei das rückseitige Befestigungselement (17a) durch einen beidseitig wirksamen Klebestreifen (28) gebildet ist.

2. Schaltschrankbefestigungsteil zur Befestigung von Schaltschrank-Geräten, insbesondere elektrischen Geräten (18) in einem Schaltschrank, mit einem Befestigungskörper (2), der wenigstens ein rückseitiges Befestigungselement (17a) zu seiner Befestigung am Schaltschrank und wenigstens zwei vorderseitige Befestigungselemente (19, 22) aufweist, von denen das erste vorderseitige Befestigungselement (19) zur vorzugsweise lösbaren direkten Befestigung eines Gerätes (18) und das zweite vorderseitige Befestigungselement (22) zur alternativen, vorzugsweise lösbaren Befestigung eines Tragteils (21) für ein Gerät (18) eingerichtet ist.

3. Schaltschrankbefestigungsteil nach Anspruch 2,
**dadurch gekennzeichnet,** daß das rückseitige Befestigungselement (17a) durch einen beidseitig wirksamen Klebestreifen (28) gebildet ist.

4. Schaltschrankbefestigungsteil nach einem der Ansprüche 1 oder 3,
**dadurch gekennzeichnet,** daß der Klebestreifen (28) beidseitig jeweils mit einer abziehbaren Schutzfolie belegt ist.

5. Schaltschrankbefestigungsteil nach einem der Ansprüche 1 oder 3,
**dadurch gekennzeichnet,** daß der Klebestreifen (28) am Befestigungskörper (2) vorgefertigt angeklebt ist und auf seiner Rückseite mit einer Schutzfolie belegt ist.

6. Schaltschrankbefestigungsteil nach einem der vorhergehenden Ansprüche,
**dadurch gekennzeichnet,** daß das rückseitige Befestigungselement (17) mindestens ein Loch (29a, 29b) für eine in eine zugehörige Wand (16) des Schaltschranks einschraubbare Befestigungsschraube (31) umfaßt.

7. Schaltschrankbefestigungsteil nach einem der vorhergehenden Ansprüche,
**dadurch gekennzeichnet,** daß
das erste vorderseitige Befestigungselement (19) durch zwei einander gegenüberliegend angeordnete Hintergreifstege (32) gebildet ist, die an einander gegenüberliegenden Umfangsrändern des Befestigungskörpers (2) angeordnet sind.

8. Schaltschrankbefestigungsteil nach Anspruch 2,
**dadurch gekennzeichnet,** daß
das zweite vorderseitige Befestigungselement (22) durch mindestens ein Loch (15) im Befestigungskörper (2) gebildet ist, in welchem das Tragteil (21) mittels wenigstens einer Befestigungsschraube befestigbar ist.

9. Schaltschrankbefestigungsteil nach Anspruch 2,
**dadurch gekennzeichnet,** daß
das Tragteil (21) und das erste vorderseitige Befestigungselement (32) in ihrer Form und Größe derart ausgebildet sind, daß ein Gerät (18) wahlweise direkt am Befestigungskörper (2) oder bei Vorhandensein eines Tragteils (21) an letzterem befestigbar ist.

10. Schaltschrankbefestigungsteil nach einem der vorhergehenden Ansprüche,
**dadurch gekennzeichnet,** daß
der Befestigungskörper (2) eine U- oder topfförmige Querschnittsform aufweist, wobei die Bodenwand (11) rückseitig angeordnet ist.

11. Schaltschrankbefestigungsteil nach Anspruch 10,
**dadurch gekennzeichnet,** daß
vorzugsweise vertikal übereinander angeordnete, zweite rückseitige Befestigungselemente (17) bildende Löcher (29) in der Bodenwand (11) vorgesehen sind.

12. Schaltschrankbefestigungsteil nach Anspruch 10 oder 11,
**dadurch gekennzeichnet,** daß
das Loch (15), das das zweite vorderseitige Befestigungselement (22) bildet, einem von der Bodenwand (11) vorspringenden Befestigungsansatz (14) angeordnet ist.

13. Schaltschrankbefestigungsteil nach einem der vorhergehenden Ansprüche,
**dadurch gekennzeichnet,** daß
am Befestigungskörper (2) vorzugsweise zwei Arretierelemente (41a, 41b) angeordnet sind, die so ausgebildet sind, daß ein am Befestigungskörper (2) befestigtes Gerät (18) gegen Verrutschen gesichert ist.

14. Schaltschrankbefestigungsteil nach einem der vorhergehenden Ansprüche,
**dadurch gekennzeichnet,** daß
die Länge (b) des Befestigungskörpers (2) etwa der Länge eines Gerätes (18) entspricht.

15. Schaltschrankbefestigungsteil nach einem der vorhergehenden Ansprüche,
**dadurch gekennzeichnet,** daß
der Befestigungskörper (2) ein einstückiges Bauteil, insbesondere ein Spritzgießteil, ist, vorzugsweise aus Kunststoff.
